# EUROPÄISCHE PATENTANMELDUNG

(11) **EP 0 751 638 A2**
(43) Veröffentlichungstag der Anmeldung: **02.01.1997**
(21) Anmeldenummer: 96810388.7
(22) Anmeldetag: 12.06.1996
(51) Int. Cl.: H04B 10/207, H04B 10/00

(54) **Informationsübertragungseinrichtung mit optischem Informationsverteiler**

(30) Priorität: 26.06.1995 DE 19523097
(71) Anmelder: ABB RESEARCH LTD., CH-8050 Zürich 11 (CH)
(72) Erfinder: Deck, Bernhard, 79761 Waldshut-Tiengen (DE)
(74) Vertreter: Rzehak, Herbert

(57) **Zusammenfassung**

In Stromrichtern mit mehreren in Reihe und/oder parallelgeschalteten steuerbaren Halbleiterbauelementen je Wechselstromphase werden für diese gleichzeitig mehrere gleiche Steuersignale benötigt. Drahtverbindungen können unerwünschte Induktivitäten aufweisen. Sie sind störanfälliger im Bereich von elektrischen und magnetischen Feldern, so daß Fehler beim Betrieb möglich sind. Ein optischer Informationsverteiler (1), der lichtstreuende Partikel (P1) enthält, ermöglicht es, eintretendes Licht (L) von einem Lichtemitter (2) induktionsfrei gleichzeitig an mehrere Lichtaustrittstellen abzugeben. Dort kann es mittels Lichtdetektoren in Steuerungsmodulen (F11 - Fm1), die in einer Modulmatrix (4) angeordnet sind, empfangen und eine im Licht (L) kodierte Information ausgewertet werden. Die Steuerungsmodule (F11 -F1n) sind über IR-Emitter (9) einer Matrixsteuereinrichtung (5) aktivierbar.

## Beschreibung

### TECHNISCHES GEBIET

Bei der Erfindung wird ausgegangen von einer Informationsübertragungseinrichtung nach dem Oberbegriff des Patentanspruchs 1. Die Erfindung betrifft auch eine Verwendung dieser Informationsübertragungseinrichtung.

### STAND DER TECHNIK

Mit dem Oberbegriff des Patentanspruchs 1 nimmt die Erfindung auf einen Stand der Technik Bezug, wie er aus der DE 3 938 321 A1 bekannt ist. Dort ist eine optische Signalmischeinrichtung angegeben, bei der an eine seitliche Oberfläche einer fluoreszierenden optischen Mischfaser mehrere optische Signale über je eine optische Faser eingespeist werden. An beiden Endseiten der Mischfaser sind Fotodetektoren angeordnet, deren elektrische Ausgangssignale das Mischungsergebnis angeben.

Aus der GB 2 194 073 A ist eine transparente, flache Scheibe aus einem lichtstreuenden, organischen Glas mit lichtstreuenden Löchern im Innern und mit fluoreszierender Farbe gefärbten Fäden bekannt, die für Reklamezwecke einsetzbar ist. Randseitig in die Scheibe eintretendes Licht wird an den Löchern gestreut und tritt an einer ebenen Scheibenfläche aus, wobei die zur Lichtaustrittsfläche gegenüberliegende Scheibenfläche verspiegelt ist.

Aus dem deutschen Taschenbuch Elektrotechnik, Band 5, Elemente und Baugruppen der Elektroenergietechnik, Herausgeber: Prof. Dr. sc. techn. Dr. techn. h. c. Eugen Philippow, 1. Auflage, VEB Verlag Technik, Berlin, 1980, S. 933 und 934, ist es bekannt, die Übertragung des Zündimpulses an einen Thyristor oder an ein Triac mit Hilfe eines optoelektronischen Koppelgliedes vorzunehmen. Dieses besteht aus einer durch ein Ansteuergerät angeregten GaAs-Lumineszenzdiode, die Licht auf einen Fototransistor strahlt, der über einen Impulsverstärker den Zündstrom des Thyristors oder Triacs abgibt.

Zum einschlägigen Stand der Technik wird zusätzlich auf einen Artikel von Holger Zeltwanger, "CAN-Chips - die große Vielfalt", in der Zeitschrift: Elektronik 8/1994, S. 68 - 73, verwiesen, aus der ein CAN-Controller bekannt ist, der bei der vorliegenden Erfindung zum Datentransport verwendbar ist.

Für die Steuerung z. B. von in Reihe oder parallelgeschalteten Halbleiterventilen ist es erforderlich, daß ein Steuersignal gleichzeitig an viele Halbleiterventile zu übertragen.

### DARSTELLUNG DER ERFINDUNG

Die Erfindung, wie sie im Patentanspruch 1 definiert ist, löst die Aufgabe, eine Informationsübertragungseinrichtung der eingangs genannten Art derart weiterzuentwickeln, daß eine optisch zuführbare Eingangsinformation gleichzeitig an vielen Ausgangsstellen zur Verfügung steht.

Vorteilhafte Ausgestaltungen der Erfindung sind in den abhängigen Patentansprüchen definiert und eine vorteilhafte Verwendungen in einem Verwendungsanspruch.

Ein Vorteil der Erfindung besteht in einer verbesserten Servicefreundlichkeit und in einer geringeren Informations-Ausfallrate. Es entfallen mechanische Belastungen im Kabel- und Steckerbereich. Daten können drahtlos an mehrere Stellen gleichzeitig übermittelt werden.

Sonst übliche Drahtleitungen zur Steuerung von elektrischen Schaltern sind störanfälliger im Bereich von elektrischen und magnetischen Feldern und können zu Fehlern in der Ansteuerung führen. Durch die optische Datenübertragung werden derartige Störstrahlungen und Fehlerquellen vermieden.

Physikalische Parameter können auf Grenzwertüberschreitungen überwacht und Fehler angezeigt werden.

### KURZE BESCHREIBUNG DER ZEICHNUNGEN

Die Erfindung wird nachstehend anhand von Ausführungsbeispielen erläutert. Es zeigen:
- Fig. 1: ein Blockschaltbild eines Steuerblockes mit Lichtemitter, Informationsverteiler, Modulmatrix und Matrixsteuereinrichtung,
- Fig. 2: eine Modulmatrix mit zugehöriger Matrixsteuereinrichtung gemäß Fig. 1,
- Fig. 3: ein Blockschaltbild eines Steuerungsmoduls der Modulmatrix gemäß Fig. 2,
- Fig. 4a - 4d: Signaldiagramme zur Erläuterung der Steuerung der Modulmatrix gemäß Fig. 2,
- Fig. 5: ein Blockschaltbild der Datenübertragung von einem Regler auf einen Steuerblock gemäß Fig. 1 und
- Fig. 6: ein Blockschaltbild eines Umrichters, dessen Wechselrichter in Abhängigkeit von Ausgangssignalen von Steuerungsmodulen gemäß Fig. 3 gesteuert wird.

### WEGE ZUR AUSFÜHRUNG DER ERFINDUNG

In den Figuren sind gleiche Teile mit gleichen Bezugszeichen gekennzeichnet.

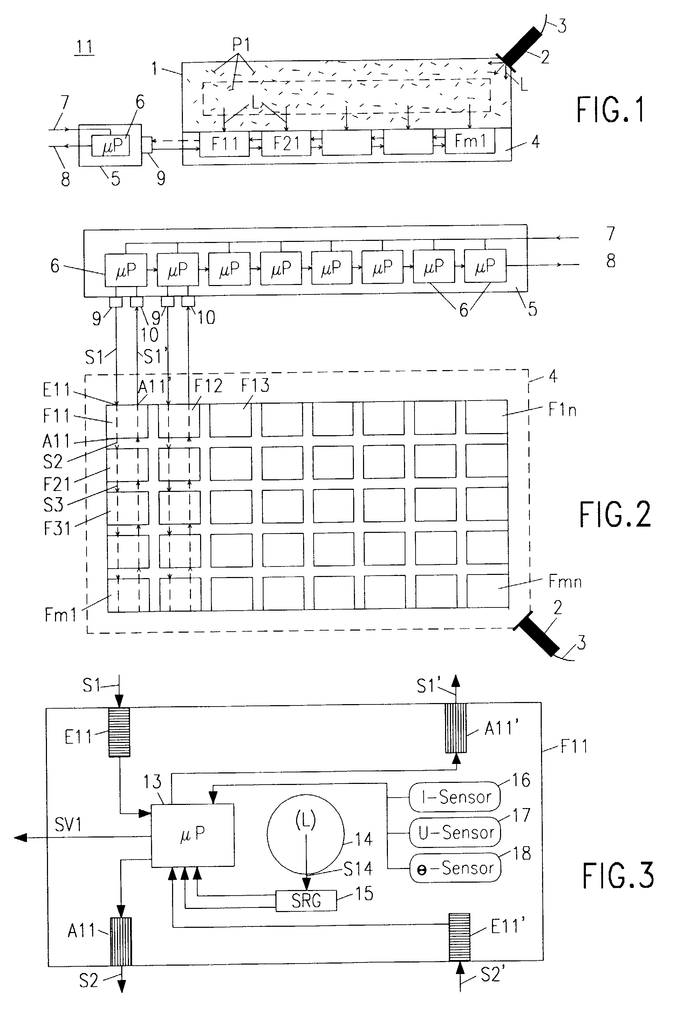

Fig. 1 zeigt einen Steuerblock (11) aus einem quaderförmigen, lichtstreuenden, transparenten Körper bzw.
Informationsverteiler (1), einer Modulmatrix (4) und einer Matrixsteuereinrichtung (5) im Querschnitt. Die obere rechte Ecke des Informationsverteilers (1) ist abgeschrägt. An dieser Abschrägung ist eine Lampe bzw. ein Lichtemitter (2) angesetzt, dessen Licht (L) in Abhängigkeit von zu übertragenden Informationen moduliert ist. Diese Informationen werden dem Lichtemitter (2) mittels einer seriellen Datenleitung (3) von einem in Fig. 5 dargestellten Mikroprozessor (12) zugeführt.

Anstelle eines Vollkörpers, vorzugsweise aus Glas oder Kunststoff, mit lichtstreuenden Partikeln (P1) im Inneren, kann als Informationsverteiler (1) z. B. auch ein staub- oder gasgefülltes Glasrohr verwendet werden, welches lichtstreuend ist, d. h., lichtreflektierende Partikel (P1) enthält. Dieser Vollkörper kann auch aus fluoreszierendem Material bestehen, welches mittels eines Laserstrahls mit einem kurzwelligen Licht mit einer Wellenlänge von < 300 nm angeregt wird. Direkt unterhalb des Informationsverteilers (1) oder in geringem Abstand zu ihm ist eine scheibenförmige Modulmatrix (4) mit mehreren matrixartig in Zeilen und Reihen angeordneten Steuerungsmodulen (F11 - Fmn), vgl. Fig. 2, vorgesehen, von denen in Fig. 1 nur die Steuerungsmodule (F11 - Fm1) in der 1. Reihe dieser Modulmatrix (4) im Querschnitt zu sehen sind. Links von der Modulmatrix (4) ist, in geringem Abstand zu dieser, eine Matrixsteuereinrichtung (5) mit mehreren Mikroprozessoren (6) angeordnet, von denen in Fig. 1 nur einer dargestellt ist.

Fig. 2 zeigt den Steuerblock (11) gemäß Fig. 1 in Draufsicht. Jeder der Mikroprozessoren (6) in der Matrixsteuereinrichtung (5) ist nur einem Steuerungsmodul (F11 - F1n) in der 1. Zeile der Modulmatrix (4) zugeordnet. Diese Mikroprozessoren (6) erhalten eingangsseitig Steuerinformationen zum Einschalten der Steuerungsmodule (F11 - F1n) über einen allen gemeinsamen Eingangsdatenbus (7), der ein sog. CAN-Bus sein kann, von dem Mikroprozessor (12), vgl. Fig. 5. Jeder dieser Mikroprozessoren (6) kann über einen Infrarot- bzw. IR-Emitter (9) ein IR-Ausgangssignal (S1) an sein Steuerungsmodul (F11 - F1n) absenden und damit dieses einschalten. Von demselben Steuerungsmodul (F11 - F1n) kann der jeweilige Mikroprozessor (6) über einen Infrarot- bzw. IR-Empfänger (10) ein Fehlersignal (S1') empfangen und über einen allen Mikroprozessoren (6) gemeinsamen Ausgangs- bzw. Fehlerdatenbus (8), der ebenfalls ein sog. CAN-Bus sein kann, dem Mikroprozessor (12), vgl. Fig. 5, senden. Wegen der besseren Übersichtlichkeit sind die IR-Emitter (9) und IR-Empfänger (10) nur für die ersten beiden Mikroprozessoren (6) dargestellt.

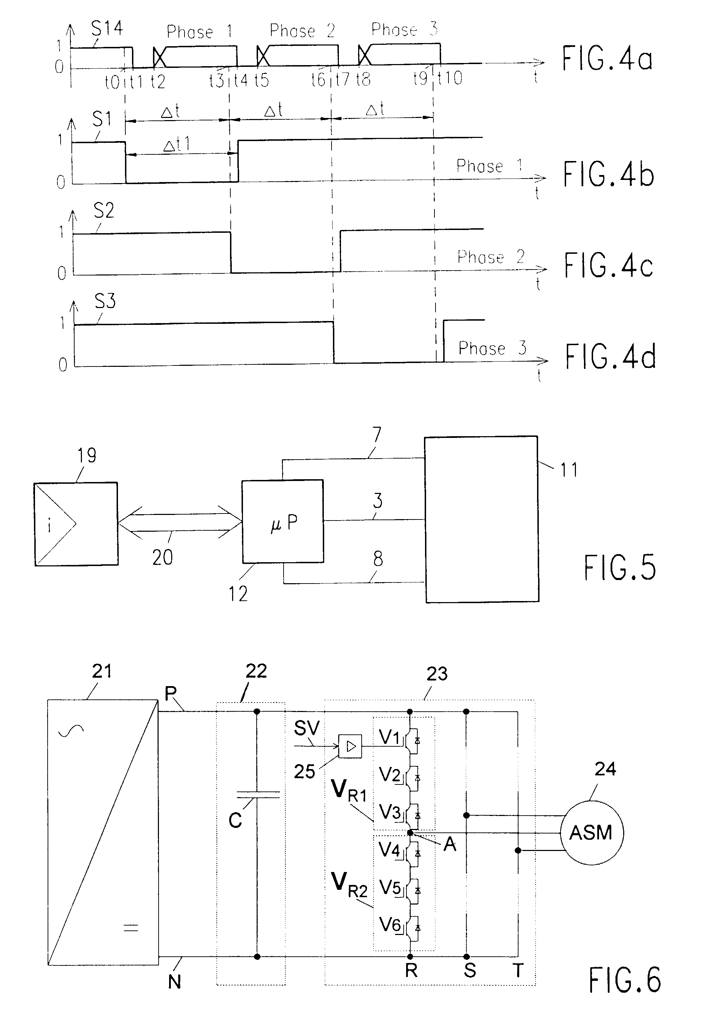

Die in unterschiedlichen Zeilen angeordneten Steuerungsmodule (F11 - Fmn) sind unterschiedlichen Phasen z. B. einer zu steuernden Asynchronmaschine oder Wechselstromlast (24) zugeordnet, vgl. Fig. 6. Vorzugsweise weist jede Phase eine gleiche Phasendauer (Δt) auf, vgl. Fig. 4b. Bei m Phasen ist die Phasendauer Δt = T/m, wobei T die Periodendauer einer Schwingung eines Steuersignals für die Wechselstromlast (24) bezeichnet. Steuerungsmodule (F11 - Fmn) benachbarter Zeilen haben einen Abstand im Bereich von 2 mm - 3 mm; die Informationsübertragung zwischen ihnen erfolgt optisch.

Fig. 3 zeigt ein Blockschaltbild des Steuerungsmoduls (F11) gemäß Fig. 2, das gleich aufgebaut ist wie alle anderen Steuerungsmodule (F12 - Fmn). Ein einfacher Mikroprozessor (13) erhält das IR-Ausgangssignal (S1) von dem IR-Emitter (9) über einen Eingang bzw. IR-Detektor (E11), welches bei einem Übergang von 1 nach 0 in einem Zeitpunkt (t0), vgl. die Fig. 4a und 4b, das Steuerungsmodul (F11) ein- bzw. auf Empfang schaltet. Während einer vorgebbaren Einschaltdauer (Δt1) kann der Mikroprozessor (13) ein Lichtinformationssignal (S14), vgl. auch Fig. 4a, in welcher Blöcke mit Information gepunktet dargestellt sind, von einem optoelektrischen Wandler (14) über ein Schieberegister (15) mit seriellem Eingang und parallelem Ausgang erhalten bzw. empfangen. Dabei stammt das Lichtinformationssignal (S14) von Licht (L), das von dem Lichtemitter (2) abgestrahlt wurde. Der Mikroprozessor (13) sendet nach der Phasendauer (Δt) zu einem Zeitpunkt (t3) über einen Ausgang bzw. eine Photodiode (A11) ein IR- bzw. Ausgangssignal (S2) als Einschaltsignal an den IR-Detektor (E11) des Steuerungsmoduls (F21), vgl. Fig. 4c. Der Mikroprozessor (13) des Steuerungsmoduls (F21) sendet nach seiner Phasendauer (Δt) zu einem Zeitpunkt (t6) über seinen Ausgang (A11) ein Ausgangssignal (S3) als Einschaltsignal an den IR-Detektor (E11) des Steuerungsmoduls (F31) usw. bis zum Steuerungsmodul (Fm1), vgl. Fig. 2 und Fig. 4d.

Der Mikroprozessor (13) des Steuerungsmoduls (F11) erhält vom Steuerungsmodul (F21) über einen IR-Detektor (E11') ein etwa vorhandenes Fehlersignal (S2') und sendet über eine Photodiode (A11') ein Fehlersignal (S1') an den IR-Empfänger (10) des Mikroprozessors (6), das einen etwa aufgetretenen Fehler in einem der Steuerungsmodule (F11 - Fm1) kennzeichnet.

Ein Strom- bzw. I-Sensor (16), ein Spannungs- bzw. U-Sensor (17) und ein Temperatur- bzw. θ-Sensor (18), welche an dem Steuerungsmodul (F11) angebracht sind und dessen Strom-, Spannungs- und Temperaturwerte detektieren, liefern ihre Meßwerte an den Mikroprozessor (13), der in Abhängigkeit von einer Grenzwertüberschreitung von vorgebbaren Strom-, Spannungs- und Temperaturgrenzwerten einen entsprechenden Fehler erfaßt und kodiert im Fehlersignal (S1') weiterleitet. Auf diese Weise kann mittels des Mikroprozessors (12), vgl. Fig. 5, festgestellt werden, welches Steuerungsmodul (F11-Fmn) von welchem Fehler betroffen ist, so daß eine schnelle und einfache Fehlerauswertung und -Behebung möglich ist.

Der Mikroprozessor (13) liefert im Zeitpunkt (t0) ein Ausgangs-bzw. Steuersignal (SV) zum Einschalten bzw. Steuern eines steuerbaren Halbleiterbauelements (V1) über einen Verstärker (25), vgl. die Fig. 3 und 6. Jedes Steuerungsmodul (F11 - Fmn) steuert mit seinem Steuersignal (SV) nur ein steuerbares Halbleiterbauelement (V1 - V6), wobei alle steuerbaren Halbleiterbauelemente (V1 - V6) einer Wechselstromphase (R) von Steuerungsmodulen (F11 - F1n) einer Matrixzeile der Modulmatrix (4) gesteuert werden. Die Steuerungsmodule (F11 - Fmn) schalten sich nach einer vorgebbaren Einschaltdauer (Δt1), die zum Empfang der für sie bestimmten Information im Lichtinformationssignal (S14) ausreicht, zu Zeitpunkten (t4) bzw. (t7) bzw. (t10) usw. mittels ihres Mikroprozessors (13) selbst ab, vgl. die Fig. 4a - 4d; ihre Einschaltzeitpunkte (t0) bzw. (t3) bzw. (t6) bzw. (t9) liegen kurz vor dem Ende eines vorangehenden Informationsblockes des Lichtinformationssignals (S14). Jeder Informationsblock enthält u. a. Informationen über die Anzahl der Phasen (R, S, T, ...) der Asynchronmaschine (24), über die Betriebsfrequenz der Asynchronmaschine (24), 3 Bit Information über die Flankensteilheit des Steuersignals (SV) sowie 3 Bit für den Ausschaltzeitpunkt eines Steuerungsmoduls (F11 - Fmn).

Fig. 5 zeigt in einem Blockschaltbild eine Datenübertragung von einem Leitstand oder einem Regler oder einem Stromregler (19) über nur eine serielle Datenleitung (20) mit einer Übertragungsrate von ≥ 6,7 MB. Die serielle Datenleitung (3) vom Mikroprozessor (12) zum Steuerblock (11) sollte eine Übertragungsrate von ≥ 4,3 MB aufweisen.

Fig. 6 zeigt in einem Blockschaltbild einen Umrichter, bestehend aus einem Gleichrichter (21), einem Gleichspannungszwischenkreis (22) und einem Wechselrichter (23), der wechselstromseitig über einen Lastanschluß (A) an eine Wechselstromlast bzw. an eine Asynchronmaschine (24) angeschlossen ist. Der Gleichspannungszwischenkreis (22) besteht aus einem Kondensator (C), welcher einerseits mit einem positiven Anschluß (P) und andererseits mit einem negativen Anschluß (N) des Gleichrichters (21) elektrisch verbunden ist.

Der Wechselrichter (23) weist je Wechselstromphase (R, S, T) 2 gleich aufgebaute niederinduktive Brückenzweige auf, von denen aus Gründen der Übersichtlichkeit nur die Brückenzweige (V_{R1}, V_{R2}) zur Wechselstromphase (R) dargestellt sind. Der Brückenzweig (V_{R1}) weist 3 in Reihe geschaltete steuerbare Halbleiterbauelemente (V1, V2, V3) und der Brückenzweig (V_{R2}) 3 in Reihe geschaltete steuerbare Halbleiterbauelemente (V4, V5, V6) auf. Als steuerbare Halbleiterbauelemente (V1 - V6) sind z. B. bipolare Transistoren, Feldeffekttransistoren, abschaltbare Thyristoren (GTOs) und vorzugsweise bipolare Transistoren mit isoliertem Gate (IGBTs) verwendbar. Antiparallel zu jedem steuerbaren Halbleiterbauelement (V1-V6) ist eine Freilaufdiode geschaltet.

Die steuerbaren Halbleiterbauelemente (V1 - V3) werden dabei durch die Steuersignale (SV) der Steuerungsmodule (F11 - F13), welche gleichzeitig IR-Ausgangssignale (S1) von ihren zugehörigen Mikroprozessoren (6) erhalten, gleichzeitig über je einen Verstärker (25) angesteuert. Entsprechendes gilt für die steuerbaren Halbleiterbauelement (V4 - V6). Die steuerbaren Halbleiterbauelemente der Ventilzweige zur 2. Wechselstromphase (S) werden durch die Steuerungsmodule (F21 - F2n) angesteuert, die der 3. Wechselstromphase (T) durch die Steuerungsmodule (F31 - F3n) usw. Wegen der besseren Übersichtlichkeit ist nur ein Verstärker (25) zum steuerbaren Halbleiterbauelement (V1) dargestellt.

Die angegebene Steuerung ermöglicht z. B. den Betrieb der Wechselstromlast (24) mit 72 Wechselstromphasen (R, S, T, ...) und variablen Frequenzen bis zu 10 kHz.

Fehlersignale (S1') der Modulmatrix (4) können sich außer auf Strom, Spannung und Temperatur z. B. auch auf zu wenig Hilfsenergie sowie Art und Ort eines Defektes beziehen.

Es versteht sich, daß je Wechselstromphase (R, S, T) auch mehrere steuerbare Halbleiterbauelemente (V1 - V6) oder Brückenzweige (V_{R1}, V_{R2}) parallelgeschaltet sein können, wenn große Ströme gesteuert werden sollen.

Der Lichtemitter (2) könnte anstatt an einer Ecke des Informationsverteilers (1) auch an einer Seitenfläche oder Kante des Informationsverteilers (1) angesetzt sein, wobei die Austrittsrichtung des Lichtes (L) vom Lichtemitter (2) mit der Eintrittsrichtung des Lichtes (L) in den jeweiligen optoelektrischen Wandler (14) einen Winkel von etwa 90° bildet. Wichtig ist, daß Licht (L) gleichzeitig zu allen optoelektrischen Wandlern (14) der Steuerungsmodule (F11 - Fmn) gelangt. Wichtig ist ferner, daß die steuerbaren Halbleiterbauelemente (V1 - V6) einen geringen Abstand zu den Steuerungsmodulen (F11 - Fmn) aufweisen, damit keine langen Leitungswege für das jeweilige Steuersignal (SV) entstehen.

Der Informationsverteiler (1) kann randseitig und/oder an der zur Lichtaustrittsfläche gegenüberliegenden Fläche verspiegelt sein oder Spiegelfolien aufweisen (nicht dargestellt).

### BEZEICHNUNGSLISTE

- 1: Informationsverteiler, lichtstreuender, transparenter Körper
- 2: Lichtemitter
- 3: serielle Datenleitung
- 4: Modulmatrix, Modulanordnung
- 5: Matrixsteuereinrichtung, Modulsteuereinrichtung
- 6: Mikroprozessoren von 5
- 7: Eingangsdatenbus von 6
- 8: Ausgangsdatenbus von 6, Fehlerdatenbus
- 9: IR-Emitter
- 10: IR-Empfänger
- 11: Steuerblock
- 12, 13: Mikroprozessoren
- 14: optoelektrischer Wandler, Informationsempfänger, Lichtdetektoren
- 15: Schieberegister
- 16: Stromsensor
- 17: Spannungssensor
- 18: Temperatursensor
- 19: Stromregler, Regler
- 20: serielle Datenleitung für 12
- 21: Gleichrichter
- 22: Gleichspannungszwischenkreis
- 23: Wechselrichter
- 24: Asynchronmaschine, Wechselstromlast
- 25: Verstärker
- A: Lastanschluß
- A11, A11': Ausgänge von F11, Photodioden
- C: Zwischenkreiskondensator
- E11, E11': Eingänge von F11, IR-Detektoren
- F11 - Fmn: Steuerungsmodule
- L: Licht
- N: negativer Anschluß
- P: positiver Anschluß
- P1: lichtstreuende Partikel
- R, S, T: Wechselstromphasen
- S1: Ausgangssignal von 9
- S1': Ausgangssignal von A11', Fehlersignal
- S2: Ausgangssignal von A11, Einschaltsignal für F21
- S2': Fehlersignal von F21
- S3: Ausgangssignal von F21, Einschaltsignal für F31
- S14: Ausgangssignal von 14, Lichtinformationssignal
- SV1: Ausgangssignal von 13, Steuersignal für V1
- t: Zeit
- t0 - t10: Zeitpunkte
- T: Periodendauer
- V1 - V6: steuerbare Halbleiterbauelemente
- V_{R1}, V_{R2}: Brückenzweige von R
- Δt: Phasendauer
- Δt1: Einschaltdauer von F11 - Fmn

## Patentansprüche

1. Informationsübertragungseinrichtung
a) mit einem optischen Informationsverteiler (1),
b) welcher mindestens eine Lichteintrittstelle und
c) mehrere Lichtaustrittstellen aufweist,
d) welche so angeordnet sind, daß sie gleichzeitig Teile eines Lichtes (L) empfangen können, welches von dieser mindestens einen Lichteintrittstelle abgestrahlt wird,
e) wobei mehrere Informationsempfänger oder Lichtdetektoren (14) gegenüberliegend zu den Lichtaustrittstellen des Informationsverteilers (1) angeordnet sind,
dadurch gekennzeichnet,
f) daß jeder der Lichtdetektoren (14) ein Teil eines individuellen Steuerungsmoduls (F11 - Fmn) in einer Modulanordnung (4) ist.

2. Informationsübertragungseinrichtung nach Anspruch 1,
dadurch gekennzeichnet,
a) daß jeder der Lichtdetektoren (14) über ein Schieberegister (15) mit seriellem Eingang und parallelem Ausgang mit einem Mikroprozessor (13) desselben Steuerungsmoduls (F11 - Fmn) in Wirkverbindung steht und
b) daß dieser Mikroprozessor (13) in Abhängigkeit von der mittels seines Lichtdetektors (14) empfangenen Information ein Steuersignal (SV) abgibt.

3. Informationsübertragungseinrichtung nach Anspruch 1 oder 2,
dadurch gekennzeichnet,
a) daß die Steuerungsmodule (F11 - F1n) einer 1. Zeile der Modulanordnung (4) mit einer Modulsteuereinrichtung (5) optisch in Wirkverbindung stehen und
b) daß jedes dieser Steuerungsmodule (F11 - F1n) in der 1. Zeile von dieser Modulsteuereinrichtung (5) über einen IR-Emitter (9) individuell ansteuerbar ist.

4. Informationsübertragungseinrichtung nach Anspruch 3,
dadurch gekennzeichnet,
a) daß die Modulsteuereinrichtung (5) über den IR-Emitter (9) einen Einschaltbefehl oder ein Aktivierungssignal (S1) an den Mikroprozessor (13) des zugehörigen Steuerungsmoduls (F11 - F1n) sendet und
b) daß dieser Mikroprozessor (13) sein Steuerungsmodul (F11 - Fln) nach einer vorgebbaren Einschaltdauer ( t1) deaktiviert bzw. abschaltet.

5. Informationsübertragungseinrichtung nach Anspruch 4, dadurch gekennzeichnet, daß jeder Mikroprozessor (13) eines Steuerungsmoduls (F11 - Fmn) an einen Mikroprozessor (13) derselben Spalte aber einer etwa folgenden Zeile mit höherem Zeilenindex nach einer vorgebbaren Phasendauer ( t) seit seinem eigenen Einschaltzeitpunkt (t0, t3, t6, ...) ein Einschaltsignal (S2, S3, ...) sendet.

6. Informationsübertragungseinrichtung nach einem der vorhergehenden Ansprüche, dadurch gekennzeichnet,
a) daß jedes Steuerungsmodul (F11 - Fmn) eine Einrichtung (16, 17, 18) zur Selbstüberwachung auf etwaige Fehler bzw. Grenzwertüberschreitungen physikalischer Parameter (I, U, θ) aufweist,
b) daß der Mikroprozessor (13) des jeweiligen Steuerungsmoduls (F11 - Fmn) von dem Mikroprozessor (13) derselben Spalte aber einer etwa folgenden Zeile mit höherem Zeilenindex ein Fehlersignal (S2') empfängt und
c) ausgangsseitig ein Fehlersignal (S1') zur Verfügung stellt, welches einen etwa aufgetretenen Fehler nach Art und Ort kennzeichnet.

7. Informationsübertragungseinrichtung nach einem der vorhergehenden Ansprüche, dadurch gekennzeichnet, daß alle Lichtaustrittstellen in ein und derselben ebenen Fläche angeordnet sind, welche einen vorgebbaren Winkel zur Lichteintrittstelle aufweist.

8. Informationsübertragungseinrichtung nach einem der vorhergehenden Ansprüche, dadurch gekennzeichnet,
a) daß der Informationsverteiler (1) fluoreszierendes Material und/oder
b) lichtstreuende Partikel (P1) enthält.

9. Informationsübertragungseinrichtung nach einem der vorhergehenden Ansprüche, dadurch gekennzeichnet, daß der Informationsverteiler (1) einen transparenten Hohlkörper aufweist, der lichtstreuende Partikel (P1) in seinem Hohlraum enthält.

10. Verwendung einer Informationsübertragungseinrichtung nach einem der vorhergehenden Ansprüche zur Steuerung von Ventilen (V1 - V6) eines Stromrichters (23).
